# EUROPEAN PATENT SPECIFICATION

(11) **EP 0 465 190 B1**
(45) Date of publication and mention of the grant of the patent: **07.09.1994**
(21) Application number: 91305947.3
(22) Date of filing: 01.07.1991
(51) Int. Cl.: B60C 15/06

(54) **Radial tyre**
Radialluftreifen
Pneumatique à carcasse radiale

(30) Priority: 03.07.1990 JP 176804/90
(43) Date of publication of application: 08.01.1992
(73) Proprietor: SUMITOMO RUBBER INDUSTRIES LIMITED, Kobe-shi Hyogo-ken (JP)
(72) Inventor: Yokogawa, Masao, Nishi-Shirakawa-gun, Fukushima-ken (JP); Yoshida, Sadao, Shirakawa-shi, Fukushima-ken (JP)
(74) Representative: Stewart, Charles Geoffrey

(56) References cited:
- EP-A- 0 122 435
- FR-B- 1 594 780
- GB-A- 2 079 686

## Description

The present invention relates to a radial tyre having bead reinforcing layers in which cord disarrangement is reduced and tyre uniformity and ride comfort are improved whilst maintaining the bead strength.

In a radial tyre which is provided with a stiff belt layer radially outside the carcass, as the aspect ratio of the tyre is made less, flexibility of the tyre sidewalls is lost, and as a result the amount of deformation in the bead portions is increased.

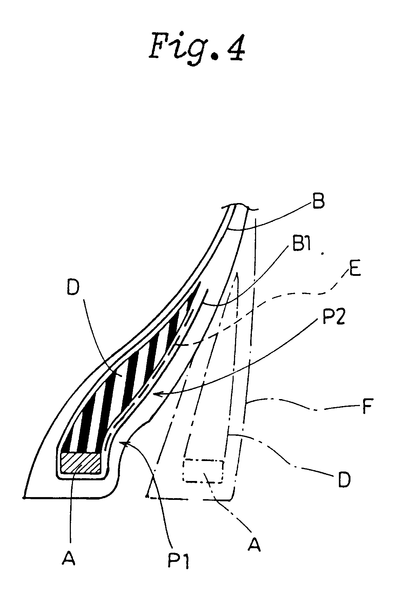

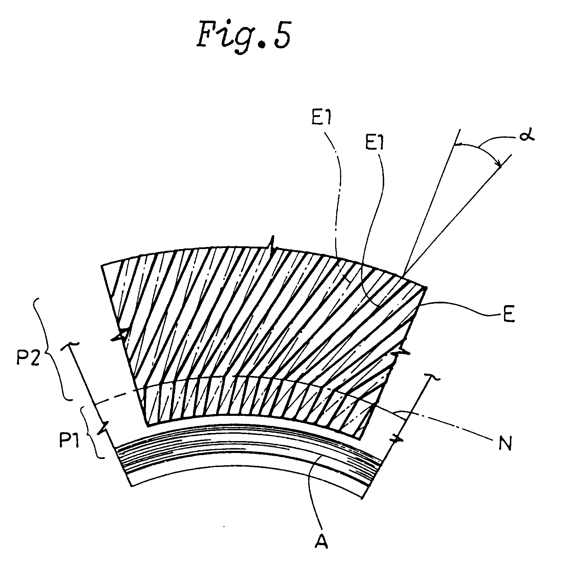

In general, as shown in Figs.4 and 5, to improve the bead durability and to increase bead rigidity of such belted radial tyres, a reinforcing layer E is disposed in each bead portion between a bead apex D and a turnup portion B1 of a carcass B which is turned up around bead cores A. The reinforcing layer E is made of tension resistant cords E1, e.g. steel cords, arranged generally radially at an inclination angle (alpha).

A tyre according to the preamble of claim 1 having a reinforcing layer whose radially outer edge is located at a height between the height of the tyre maximum width point and half that height is known, for example for Patent Publication EP-A-0 122 435.

On the other hand, in the vulcanising process for a radial tyre, the spacing distance or width between the bead portions F is largely changed. The spacing in the raw tyre state, shown by a chain line in Fig.4, is wider than its finished width. As a result, in the vulcanising process, the above-mentioned bead reinforcing layer E is subjected to a compressive stress in its lower part and in a tensile stress in its upper part.

As a result, the inclination angle (alpha) of the reinforcing cords E1 is decreased in the lower part but in the increased upper part as shown in Fig.5. Also the cords E1 are bent unevenly at the stress neutral line N, which result in cord disarrangement.

The cord disarrangement disturbs not only the cord angles but also the cord end count or spacing distribution and so bead rigidity is disturbed which deteriorates the tyre uniformity and resultant ride.

It is therefore, an object of the present invention to provide a radial tyre in which in order to solve the above-mentioned problems cord disarrangement of the bead reinforcing layer is effectively prevented without decreasing the bead strength.

According to one aspect of the present invention a pneumatic radial tyre formed by a tyre vulcanising process comprises a pair of bead cores disposed one in each bead portion, at least one carcass ply of radially arranged cords extending between the bead portions and turned up around the bead cores from the axially inside to the outside thereof to form two carcass turned up portions and one carcass main portion therebetween, a bead apex disposed between the carcass main portion and each turned up portion and extending radially outwardly from the bead core, a reinforcing layer having cords disposed between the bead apex and the carcass turned up portion and laid substantially radially at an inclination angle (alpha), the radially outer edge of said reinforcing layer being located at a height between the height of the tyre maximum width point and half of said height, each height measured from the bead base line, characterised by the radially inner edge of the reinforcing layer being located between a normal line drawn normally to the carcass main portion from the radially outer edge of a flange of its regular rim and a stress neutral line lying between a radially outer region and a radially inner region of the carcass turned up portion, wherein, in the radially outer region and the radially inner region a tensile stress and a compressive stress respectively are generated during tyre vulcanising.

Accordingly, the reinforcing layer is not subjected to a compressive force, and the reinforcing cords are free from bending deformation and disarrangement.

An embodiment of the present invention will now be described in detail in conjunction with the accompanying diagrammatic drawings, in which:
Fig.1 is a sectional view showing an embodiment of the present invention;

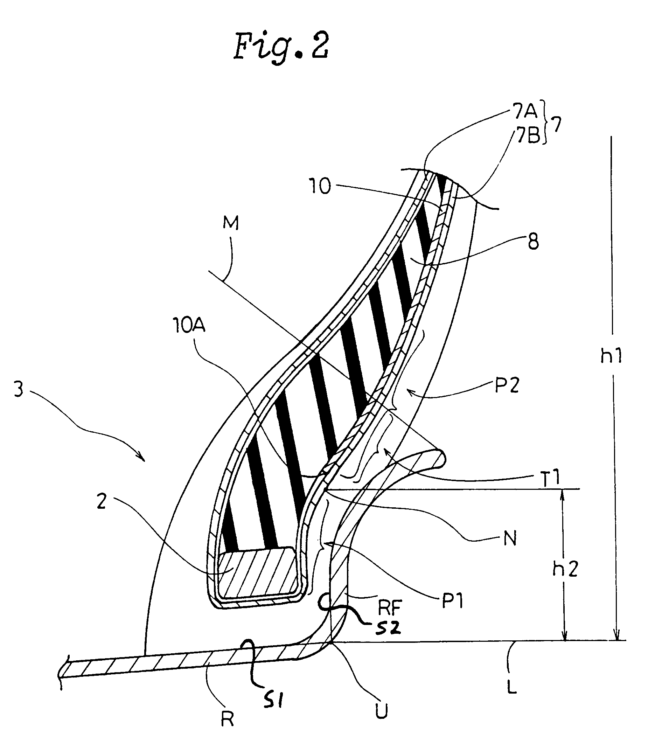

Fig.2 is an enlarged sectional view showing the bead portion thereof;

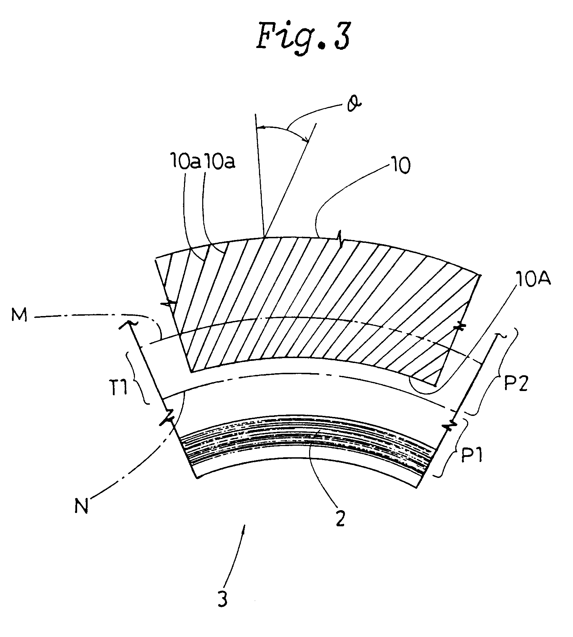

Fig.3 is a side view showing the bead reinforcing layer;
Figs.4 and 5 are respectively a sectional view and a side view explaining cord disarrangement in the prior art tyre and the tyre vulcanising process.

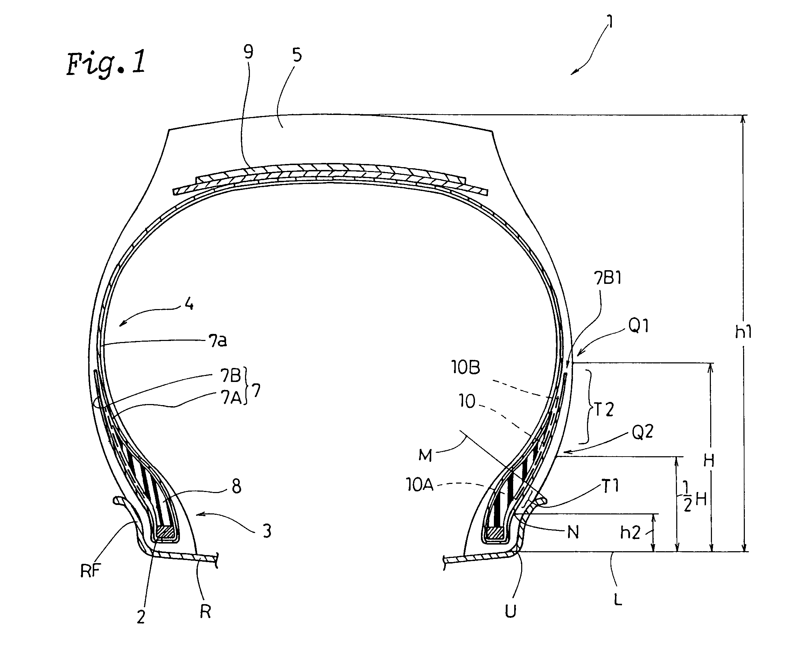

In Fig.1, which shows a radial tyre 1 in a normal inflated condition mounted on its regular rim R and inflated to its regular inner pressure and not under load, the tyre 1 has a tread portion 5, a pair of axially spaced bead portions 3, and a pair of sidewalls 4 extending radially outwardly one from each bead portion 3 to each tread edge.

A bead core 2 is disposed in each bead portion, a toroidal reinforcement carcass 7 extends between the bead portions 3 and is turned up around each bead core 2 from the axially inside to the outside thereof to form turned up portions 7B and a main carcass portion 7A therebetween. A rubber tread is disposed radially outside the carcass 7, and a belt 9 is disposed between the carcass and the rubber tread.

The carcass 7 comprises at least one ply of cords arranged radially at an angle of 70 to 90 degrees with respect to the tyre equator. In this embodiment there is one ply 7a of steel cords.

Each turned up portion 7B of the carcass ply 7a is extended from the bead portion 3 into the sidewall portion 4 so that its radially outer edge 7B1 reaches a high position radially outward of the radially outer edge of a flange RF of the regular rim R and near the tyre maximum width point Q1.

Alternatively the steel cords, organic fibre cords, e.g. nylon, polyester or the like can be used for the carcass cords. For many such cords a plurality of, for example 2 to 3, carcass plies arranged so that the cords of each ply cross the cords of the next ply, may be used. For such constructions the turned up edges of the carcass plies in each bead are preferably terminated at different heights to avoid stress concentrations.

Each bead 3 is provided with a bead apex 8 between the main carcass portion 7A and each turned up portion 7B.

The bead apex 8 in this example is composed of a single layer of hard rubber having a JIS A hardness of 65 to 95, but it can be composed of double layers of hard rubber having a JIS A hardness of 65 to 95 and soft rubber having a JIS A hardness of 40 to 65.

The bead apex extends 8 radially outwardly from the bead core 2 beyond the outer edge of the rim flange RF while gradually decreasing in thickness. The radially outer edge of the apex 8 is lower than the edge 7B1 of the carcass turned up portion 7B such that the edge 7B1 of the carcass turned up portion 7B directly contact the carcass main portion 7A.

In the present invention, between the bead apex 8 and the carcass turned up portion 7B, a bead reinforcing layer 10 is disposed.

The reinforcing layer 10 comprises rubberised parallel cords 10a each inclined at angle (theta) of 10 to 60 degrees, more preferably 20 to 40 degrees, with respect to the radial direction of the tyre.

For the reinforcing cords 10a, high modulus strong cords, for example steel cords are preferably used.

It is important for the bead reinforcing layer 10 that the radially inner edge 10A thereof is located in a radially inner region T1 between a neutral line N and a normal line M, and at the same time the radially outer edge 10B thereof is located in a radially outer region T2 between the tyre maximum width point Q1 and a half point Q2 thereof.

The tyre maximum width point Q1 is the point at which the maximum crops section width of the tyre is positioned.

The half point Q2 is located at a half of the height H of the tyre maximum width point Q1, each measured from the bead base line L.

The normal line M is a straight line drawn normally to the carcass main portion 7A from the above-mentioned radially outer edge of the rim flange RF.

The neutral line N is the boundary line between the radially inner region P1 of the carcass turned up portion 7B in which compressive stress is generated during vulcanisation of the raw tyre in a vulcanising mold and the radially outer region P2 thereof in which a tensile stress is generated during the vulcanisation.

Practically, the neutral line N is obtained by marking concentric circles, having their centres on the tyre axis, on the outer face of the bead portion of the raw tyre at regular intervals, and finding, after tyre vulcanisation has finished, the circle lying between the area in which the above-mentioned intervals are increased and the area in which the intervals are decreased, and then projecting normally to the carcass turned up portion 7B from the selected circle on to the turned up portion.

Further, the neutral line N is found by marking radially extending straight lines on the outer face of the bead portion of the raw tyre, and projecting the resultant inflection points of the radial lines on the carcass turned up portion after the vulcanisation has finished.

Furthermore, in the finished or vulcanised tyre, the neutral line may be obtained from the inflection point of the finished shape or profile of the carcass turned up portion.

The neutral line N is located at a height h2 which is generally in the range of 10 to 20 % of the tyre section height h1, each from the bead base line L. The bead base line L extends in the axial direction of the tyre passing through the heel point U at which the bead seat line S1 and the bead flange face S2 intersect each other.

If the outer edge 10B of the bead reinforcing layer 10 is terminated at a position radially outwards of the maximum width point Q1, the edge 10B suffers from the concentrated stress due to tyre deformation, and damage such as sidewall cracking, ply separation and the line are induced. On the other hand, if the height of the outer edge is less than 1/2 H, the reinforcement becomes insufficient to maintain the running performance of the tyre.

As the inner edge 10A is located in a stable region radially inwards of the normal line M, the bead rigidity and tyre running performance are maintained.

Further, the radially outer edge 10B of the reinforcing layer is located at a different height from that of the carcass turned up edge 7B1 to avoid magnification of the concentrated stress, and in this embodiment the height of the outer edge 10B is set lower than that of the outer edge 7B1.

As described above, in the radial tyre according to the present invention, as the radially inner edge of the bead reinforcing layer is terminated at a specific position free form compressive stress, cord disarrangement in the bead reinforcing layer is effectively prevented and the tyre uniformity and ride are improved without sacrificing bead strength or running performance of the tyre.

Further, the resultant radially outer termination of the inner edge of the reinforcing layer facilitates tyre weight reduction.

## Claims

1. A pneumatic radial tyre formed by a tyre vulcanising process and comprising a pair of bead cores (2) disposed one in each bead portion (3), at least one carcass ply (7) of radially arranged cords extending between the bead portions (3) and turned up around the bead cores (2) from the axially inside to the outside thereof to form two carcass turned up portions (7B) and one carcass main portion (7A) therebetween, a bead apex (8) disposed between the carcass main portion (7A) and each turned up portion (7B) and extending radially outwardly from the bead core (2), a reinforcing layer (10) having cords disposed between the bead apex (8) and the carcass turned up portion (7B) and laid substantially radially at an inclination angle (alpha), the radially outer edge (10B) of said reinforcing layer being located at a height between the height (H) of the tyre maximum width point (Q1) and half of said height (H), each height measured from the bead base line, characterised by the radially inner edge (10A) of the reinforcing layer being located between a normal line (M) drawn normally to the carcass main portion (7A) from the radially outer edge of a flange (RF) of its regular rim and a stress neutral line (N) lying between a radially outer region (P2) and a radially inner region (P1) of the carcass turned up portion (7B), wherein, in the radially outer region (P2) and the radially inner region (P1) a tensile stress and a compressive stress respectively are generated during tyre vulcanising.

2. A pneumatic radial tyre according to claim 1 characterised by the height (h2) of the radially inner edge (10A)of the reinforcing layer (10) being larger than 20 % of the tyre section height (h1), each measured from the bead base line (L), and the radially inner edge (10A) of the reinforcing layer being located radially inwards of a normal line (M) drawn normally to the carcass main portion (7A) from the radially outer edge of a flange (RF) of its regular rim (R).

## Patentansprüche

1. Ein Luftradialreifen, der durch ein Reifenvulkanisierungsverfahren gebildet ist mit einem Paar von Wulstkernen (2), das einer in jedem Wulstteil (3) angeordnet ist, zumindest einer Karkassenlage (7) von radial angeordneten Korden, die sich zwischen den Wulstteilen (3) erstrecken und um die Wulstkerne (2) von der axialen Innenseite zu der Außenseite davon umgeschlagen sind, um zwei umgeschlagene Karkassenteile (7B) und einen Karkassenhauptteil (7A) dazwischen zu bilden, einem Wulstreiter (8), der zwischen dem Karkassenhauptteil (7A) und jedem umgeschlagenen Teil (7B) angeordnet ist und sich radial auswärts von dem Wulstkern (2) erstreckt, einer Verstärkungsschicht (10) mit Korden, die zwischen den Wulstreiter (8) und dem umgeschlagenen Karkassenteil (7B) angeordnet sind und im wesentlichen radial in einem Neigungswinkel (alpha) gelegt sind, wobei der radial äußere Rand (10B) der Verstärkungsschicht bei einer Höhe zwischen der Höhe (H) des Punktes (Q1) der maximalen Reifenbreite und dem Halben der Höhe (H) angeordnet ist, wobei jede Höhe von der Wulstbasislinie gemessen wird, dadurch gekennzeichnet, daß der radial innere Rand (10A) der Verstärkungsschicht zwischen einer Normallinie (M), die normal zu dem Karkassenhauptteil (7A) von dem radial äußeren Rand eines Flansches (RF) seiner regulären Felge und einer Beanspruchungsneutrallinie (N) gezogen ist, die zwischen einem radial äußeren Bereich (P2) und einem radial inneren Bereich (P1) des umgeschlagenen Karkassenteils (7B) liegt, angeordnet ist, worin, in dem radial äußeren Bereich (P2) und dem radial inneren Bereich (P1) eine Zugbeanspruchung bzw. eine kompressive Beanspruchung während der Reifenvulkanisierung erzeugt werden.

2. Ein Luftradialreifen nach Anspruch 1, dadurch gekennzeichnet, daß die Höhe (h2) des radial inneren Randes (10A) der Verstärkungsschicht (10) größer als 20% der Reifenschnitthöhe (h1) ist, jede gemessen von der Wulstbasislinie (L), und der radial innere Rand (10A) der Verstärkungsschicht radial einwärts einer Normallinie (M) angeordnet ist, die normal zu dem Karkassenhauptteil (7A) von dem radial äußeren Rand eines Flansches (RF) seiner regulären Felge (R) gezogen ist.

## Revendications

1. Pneumatique à carcasse radiale formée par un procédé de vulcanisation de pneumatique et comprenant deux tringles (2) disposées chacune dans une partie de talon (3), au moins une nappe de carcasse (7) formée de câblés disposés radialement et placée entre les parties de talon (3) et repliée autour des tringles (2) de l'intérieur vers l'extérieur en direction axiale pour la formation de deux parties repliées (7B) de carcasse et d'une partie principale (7A) de carcasse placée entre les parties repliées, une pointe (8) de bourrage de talon placée entre la partie principale (7A) et chaque partie repliée (7B) de carcasse et disposée radialement à l'extérieur de la tringle (2), une couche d'armature (10) ayant des câblés placés entre la pointe (8) de bourrage de talon et la partie repliée (7B) de carcasse et disposés en direction pratiquement radiale avec un angle d'inclinaison (alpha), le bord radialement externe (10B) de la couche d'armature étant disposé à une hauteur comprise entre la hauteur (H) du point de largeur maximale (Q1) du pneumatique et la moitié de cette hauteur (H), chaque hauteur étant mesurée par rapport à une ligne de base de talon, caractérisé en ce que le bord radialement interne (10A) de la couche d'armature est placé entre une droite (M) perpendiculaire disposée perpendiculairement à la partie principale de carcasse (7A) depuis le bord radialement externe d'un flasque (RF) de la jante normale et un axe neutre de contrainte (N) disposé entre une région radialement externe (P2) et une région radialement interne (P1) de la partie repliée (7B) de carcasse, et dans lequel, dans la partie radialement externe (P2) et la région radialement interne (P1), une contrainte de traction et une contrainte de compression sont respectivement créées pendant la vulcanisation du pneumatique.

2. Pneumatique à carcasse radiale selon la revendication 1, caractérisé en ce que la hauteur (h2) du bord radialement interne (10A) de la couche d'armature (10) est supérieure à 20 % de la hauteur (h1) en coupe du pneumatique, chaque hauteur étant mesurée depuis la ligne de base de talon (L), et le bord radialement interne (10A) de la couche d'armature est placé radialement à l'intérieur d'une droite perpendiculaire (M) tracée perpendiculairement à la partie principale (7A) de carcasse à partir du bord radialement externe d'un flasque (RF) de la jante normale (R).
